# EUROPEAN PATENT SPECIFICATION

(11) **EP 4 365 514 B1**
(45) Date of publication and mention of the grant of the patent: **03.12.2025**
(21) Application number: 23826523.5
(22) Date of filing: 21.06.2023
(51) Int. Cl.: F25B 41/40

(54) **PIPELINE DEVICE**
ROHRLEITUNGSVORRICHTUNG
DISPOSITIF DE CANALISATION

(30) Priority: 24.06.2022 CN 202221615067 U
(43) Date of publication of application: 08.05.2024
(73) Proprietor: GD Midea Heating & Ventilating Equipment Co., Ltd., Foshan, Guangdong 528311 (CN); Midea Group Co., Ltd., Foshan, Guangdong 528311 (CN)
(72) Inventor: SU, Ruier, Foshan, Guangdong 528311 (CN); WU, Yandong, Foshan, Guangdong 528311 (CN); WANG, Xinbao, Foshan, Guangdong 528311 (CN)
(74) Representative: RGTH
(86) International application number: PCT/CN2023/101757
(87) International publication number: WO 2023/246878

(56) References cited:
- CN-A- 114 234 295
- CN-A- 114 260 657
- CN-A- 114 260 657
- CN-U- 217 686 003
- JP-A- H09 196 515
- JP-A- H09 196 515
- JP-A- H1 123 071

## Description

### TECHNICAL FIELD

The present invention relates to the technical field of refrigeration systems, and more particularly, to a pipeline device.

### BACKGROUND

A pipeline device in an air conditioner generally fixes an upper cover and a lower cover by welding, wherein the upper cover and the lower cover both have a plurality of cavity halves, and after fixing the upper cover and the lower cover, the cavity halves on the upper cover and the lower cover form a plurality of complete cavities, and these cavities are used for circulating a refrigerant. A solder is laid between the upper cover and the lower cover and is used for fixing the upper cover and the lower cover by welding. However, whether there is an inleakage between two adjacent cavities cannot be determined from the outside, which makes it difficult to detect the inleakage of the pipeline device, and an inleakage point cannot be determined during the after-sales repair. CN 114 260 657 A discloses a module assembly, an air conditioner, and a method for preparing the module assembly. It aims to solve the technical problem wherein, during the welding of the existing metal joint with the module mechanism, the metal plate around the interface takes away the welding heat, resulting in the failure of the welding of the metal joint.

### SUMMARY

The present invention aims to solve, to some extent, at least one of the above-mentioned technical problems in the prior art. For this reason, the present invention provides a pipeline device for facilitating inleakage detection.

The present disclosure also provides additional pipeline devices, which do not fall within the subject-matter for which protection is sought under the present invention.

A pipeline device, according to an embodiment that does not fall within the protection scope of the present invention, includes: a first cover body and a second cover body, wherein the first cover body has a first fitting plate, the second cover body has a second fitting plate, wherein the first fitting plate and the second fitting plate face towards each other and fit with each other to form a first cavity and a second cavity for a refrigerant flow, and an isolation portion located between the first cavity and the second cavity, wherein an arrangement path of the isolation portion laterally faces towards an extension path of the first cavity and an extension path of the second cavity at two sides of the isolation portion; the isolation portion includes: at least one first slit and at least one second slit, at least one first slit provided on the first fitting plate and penetrating the first fitting plate; at least one second slit provided on the second fitting plate and penetrating the second fitting plate; wherein on a planar projection parallel to fitting surface of the first fitting plate and the second fitting plate, one of the at least one first slit is at least partially connected to at least one of the at least one second slit to form at least a part of the arrangement path of the isolation portion.

The pipeline device according to an embodiment that does not fall within the protection scope of the present invention, it is possible to accurately detect whether an inleakage has occurred between the first cavity and the second cavity by providing the isolation portion, thereby improving the safety in use of the pipeline device.

According to some embodiments that do not fall within the protection scope of the present invention, the at least one first slit comprises a plurality of first slit, two adjacent first slit being spaced apart by a first spacing portion, the first spacing portion being aligned with one of the at least one second slit having a length not smaller than a length of the first spacing portion; and the at least one second slit comprises a plurality of second slit, two adjacent second slit being spaced apart by a second spacing portion, the second spacing portion being aligned with one of the at least one first slit having a length not smaller than a length of the second spacing portion.

According to some embodiments that do not fall within the protection scope of the present invention, in a direction perpendicular to the fitting surface of the first fitting plate and the second fitting plate, each of the at least one first slit is aligned with a part of one of the at least one second slit that is adjacent to the first slit, and is staggered with another part of the second slit.

According to some embodiments that do not fall within the protection scope of the present invention, each of the at least one first slit is aligned with the one second slit adjacent to the first slit by a length not greater than 1/2 of a length of the first slit and not greater than 1/2 of a length of the second slit.

According to some embodiments that do not fall within the protection scope of the present invention, each of the at least one first slit is aligned with the one second slit adjacent to the first slit by a length not smaller than 1/6 of the length of the first slit and not smaller than 1/6 of the length of the second slit.

According to some embodiments that do not fall within the protection scope of the present invention, the at least one first slit comprises a plurality of first slit having equal lengths, distances between any two adjacent first slit being equal; and the at least one second slit comprises a plurality of second slit having equal lengths, distances between any two adjacent second slit being equal.

According to some embodiments that do not fall within the protection scope of the present invention, the first fitting plate is fixed to the second fitting plate by welding or connected to the second fitting plate by using a fastener.

According to some embodiments that do not fall within the protection scope of the present invention, the first cover body and the second cover body are made of stainless steel.

A pipeline device, according to an embodiment that does not fall within the protection scope of the present invention, includes: a first cover body comprising a first fitting plate, the first fitting plate having a plurality of first recesses hollowed in a first direction; a second cover body comprising a second fitting plate, the second fitting plate having a plurality of second recesses hollowed in a direction opposite to the first direction, wherein the second recesses have a one-to-one correspondence to the first recesses, wherein each of the second recesses and the corresponding first recess fit with each other to form a complete cavity, wherein an isolation portion is provided on the first fitting plate and the second fitting plate between two adjacent cavities, and wherein a length of the isolation portion is not shorter than a length of any one of the two adjacent cavities; and a solder layer provided between the first fitting plate and second fitting plate and used for soldering the first fitting plate and the second fitting plate, wherein the solder layer avoids the cavity.

For the pipeline device according to an embodiment that does not fall within the protection scope of the present invention, by providing the isolation portion, it is possible to accurately detect whether an inleakage occurs between two adjacent cavities, thereby improving the safety in use of the pipeline device.

According to some embodiments that do not fall within the protection scope of the present invention, the isolation portions between the two adjacent cavities comprise a first isolation portion provided on the first fitting plate and a second isolation portion provided on the second fitting plate, the first isolation portion and the second isolation portion having a same arrangement path.

According to some embodiments that do not fall within the protection scope of the present invention, the first isolation portion comprises a plurality of intermittent first slit; the second isolation portion comprises a plurality of intermittent second slit; in the first direction, a first spacing portion between two adjacent first slit is aligned with one of the intermittent second slit having a length not smaller than a length of the first spacing portion, and a second spacing portion between two adjacent second slit is aligned with one of the intermittent first slit having a length not smaller than a length of the second spacing portion.

According to some embodiments that do not fall within the protection scope of the present invention, in the first direction, each of the first slit is aligned with a part of the second slit that is adjacent to the first slit, and is staggered with another part of the second slit.

According to some embodiments that do not fall within the protection scope of the present invention, each of the first slit is aligned with the second slit that is adjacent to the first slit by a length not greater than 1/2 of the length of the first slit and not greater than 1/2 of the length of the second slit.

According to some embodiments that do not fall within the protection scope of the present invention, each of the first slit is aligned with the second slit that is adjacent to the first slit by a length not smaller than 1/6 of the length of the first slit and not smaller than 1/6 of the length of the second slit.

According to some embodiments that do not fall within the protection scope of the present invention, the first slit has equal lengths, distances between any two adjacent first slit being equal; and the second slit has equal lengths, distances between any two adjacent second slit being equal.

According to some embodiments that do not fall within the protection scope of the present invention, the solder layer covers an area between the first fitting plate and the second fitting plate other than the cavity.

According to some embodiments that do not fall within the protection scope of the present invention, the first cover body and the second cover body are made of stainless steel.

The pipeline device according to of the present invention includes: a first cover body having a first fitting plate; a second cover body having a second fitting plate, wherein the first fitting plate and the second fitting plate face towards each other and fit with each other to form at least one cavity for a refrigerant flow and at least one isolation portion, the at least one isolation portion being located on at least one side of a circumferential direction of the at least one cavity, and the isolation portion having an arrangement path laterally facing towards an extension path of the corresponding cavity; wherein each of the at least one isolation portion comprises: a plurality of first slit and a plurality of first spacing portion alternately provided on the first fitting plate, the first slit penetrating the first fitting plate; and a plurality of second slit and a plurality of second spacing portion alternately provided on the second fitting plate, the second slit penetrating the second fitting plate, wherein in a direction perpendicular to fitting surface of the first fitting plate and the second fitting plate, the first spacing portion face towards the second slit, and the first slit face towards the second spacing portion.

The pipeline device according to an embodiment of the present invention, by providing the isolation portion, it is possible to accurately detect whether an inleakage occurs on a side of the cavity where the isolation portion is provided, thereby improving the safety in use of the pipeline device.

According to some embodiments of the present invention, each of the first slit has a length not smaller than a length of the second spacing portion, and each of the second slit has a length not smaller than a length of the first spacing portion.

According to some embodiments of the present invention, in a direction perpendicular to the fitting surface of the first fitting plate and the second fitting plate, each of the first slit is aligned with a part of the second slit that is adjacent to the first slit, and is staggered with another part of the second slit.

According to some embodiments of the present invention, each of the first slit is aligned with the second slit that is adjacent to the first slit by a length not greater than 1/2 of a length of the first slit and not greater than 1/2 of a length of the second slit.

According to some embodiments of the present invention, each of the first slit is aligned with the second slit that is adjacent to the first slit by a length no smaller than 1/6 of a length of the first slit and not smaller than 1/6 of a length of the second slit.

According to some embodiments of the present invention, a plurality of first slit is provided and has equal lengths, distances between any two adjacent first slit being equal; and a plurality of second slit is provided and has equal lengths, distances between any two adjacent second slit being equal.

According to some embodiments of the present invention, the first fitting plate is fixed to the second fitting plate by welding or connected to the second fitting plate by using a fastener.

According to some embodiments of the present invention, the first cover body and the second cover body are made of stainless steel.

A pipeline device, according to an embodiment that does not fall within the protection scope of the present invention, includes: a first cover body having a first fitting plate; and a second cover body having a second fitting plate, wherein the first fitting plate and the second fitting plate face towards each other and fit with each other to form a cavity for a refrigerant flow and an isolation portion, the isolation portion being circumferentially arranged on a periphery of the cavity; wherein the isolation portion comprises: a plurality of first slit provided on the first fitting plate and penetrating the first fitting plate and configured to be provided at intervals along an arrangement path of the isolation portion; a plurality of second slit provided on the second fitting plate and penetrating the second fitting plate and configured to be provided at intervals along the arrangement path of the isolation portion; wherein on a planar projection parallel to fitting surface of the first fitting plate and the second fitting plate, the first slit and the second slit are alternately provided along the arrangement path of the isolation portion; wherein a head end and a tail end of each of the first slit at least partially overlap two second slit of the second slit that are adjacent to the first slit; and wherein a head end and a tail end of each of the second slit at least partially overlap two first slit of the first slit that are adjacent to the second slit.

The pipeline device according to an embodiment that does not fall within the protection scope of the present invention, by providing an isolation portion circumferentially arranged on the periphery of the cavity, it is possible to accurately detect whether an inleakage occurs in the cavity, thereby improving the safety in use of the pipeline device.

According to some embodiments that do not fall within the protection scope of the present invention, each of the first slit overlaps with the second slit that is adjacent to the first slit by a length not greater than 1/2 of a length of the first slit and not greater than 1/2 of a length of the second slit.

According to some embodiments that do not fall within the protection scope of the present invention, each of the first slit overlaps with the second slit that is adjacent to the first slit by a length not smaller than 1/6 of a length of the first slit and not smaller than 1/6 of a length of the second slit.

According to some embodiments that do not fall within the protection scope of the present invention, the first slit has equal lengths, distances between any two adjacent first slit being equal; the second slit has equal lengths, distances between any two adjacent second slit being equal.

According to some embodiments that do not fall within the protection scope of the present invention, the first fitting plate is fixed to the second fitting plate by welding or connected to the second fitting plate by using a fastener.

According to some embodiments that do not fall within the protection scope of the present invention, the first cover body and the second cover body are made of stainless steel.

A pipeline device of the present invention is defined in claim 1.

Additional aspects and advantages in accordance with the present invention will be set forth in part in the description which follows and, in part, will be obvious from the description, or may be learned by practice of the application.

### BRIEF DESCRIPTION OF DRAWINGS

FIG. 1 is a schematic assembly view of a pipeline device according to one embodiment;
FIG. 2 is an exploded view of the pipeline device as shown in FIG. 1;
FIG. 3 is a perspective view of a first cover body;
FIG. 4 is a perspective view of a second cover body;
FIG. 5 is a schematic diagram showing the relative positional relationship between the first slit and the second slit;
FIG. 6 is a schematic assembly view of a pipeline device according to another embodiment;
FIG. 7 is an exploded view of the pipeline device as shown in FIG. 6;
FIG. 8 is a front view of the pipeline device as shown in FIG. 6;
FIG. 9 is a cross-sectional view at A-A in FIG. 8;
FIG. 10 is a cross-sectional view at B-B in FIG. 8;
FIG. 11 is a front view of a pipeline device according to yet another embodiment that do not fall within the protection scope of the present invention; and
FIG. 12 is a front view of a pipeline device according to yet another embodiment that do not fall within the protection scope of the present invention.

Reference numerals:
pipeline device 10; first cover body 1; first fitting plate 11; first recess 12; first concave cavity 121; first groove 122; first spacing portion 13; first mounting hole 14; second cover body 2; second fitting plate 21; second recess 22; second concave cavity 221; second groove 222; second spacing portion 23; second mounting hole 24; solder layer 3; first avoidance hole 31; second avoidance hole 32; isolation portion 4; first slit 41; second slit 42; cavity 5; first cavity 51; second cavity 52.

### DESCRIPTION OF EMBODIMENTS

Reference will now be made in detail to the embodiments, examples of which are illustrated in the accompanying drawings, wherein like reference numerals refer to the same or similar elements throughout the several views, and wherein like reference numerals refer to elements having the same or similar functions throughout the several views. The embodiments described below referring to the figures are exemplary and are intended to be illustrative of the present disclosure and are not to be construed as limiting the present disclosure.

In describing the present disclosure, it is to be understood that the terms "longitudinal", "lateral", "length", "width", "thickness", "upper", "lower", "front", "rear", "left", "right", "vertical", "horizontal", "top", "bottom", "inner", "outer", and the like, indicate orientations or positional relationships based on the orientations or positional relationships shown in the drawings, are merely for convenience in describing the present disclosure and simplifying the description, and do not indicate or imply that the device or element referred to must have a particular orientation, be constructed in a particular orientation, and be operated, and therefore, should not be construed as limiting the present disclosure.

Further, the terms "first" and "second" are used for descriptive purposes only and are not to be construed as indicating or implying relative importance or implicitly indicating the number of technical features indicated. Thus, a feature defined as "first" or "second" may explicitly or implicitly include one or more of the stated features. In the description of the present disclosure, "a plurality of" refers to at least two, e.g., two, three, etc. unless specifically and specifically limited otherwise.

In the present disclosure, unless explicitly stipulated and limited otherwise, the terms "mounted", "coupled", "connected", "secured" and the like are to be understood in a broad sense, for example, they may be fixed connected or detachably connected, or integrated; may be a mechanical connection or an electrical connection; it may be directly connected or indirectly connected through an intermediate medium, and may be the communication between two elements or the interaction relationship between two elements. The specific meaning of the above terms in the present disclosure may be understood by a person skilled in the art as the case may be.

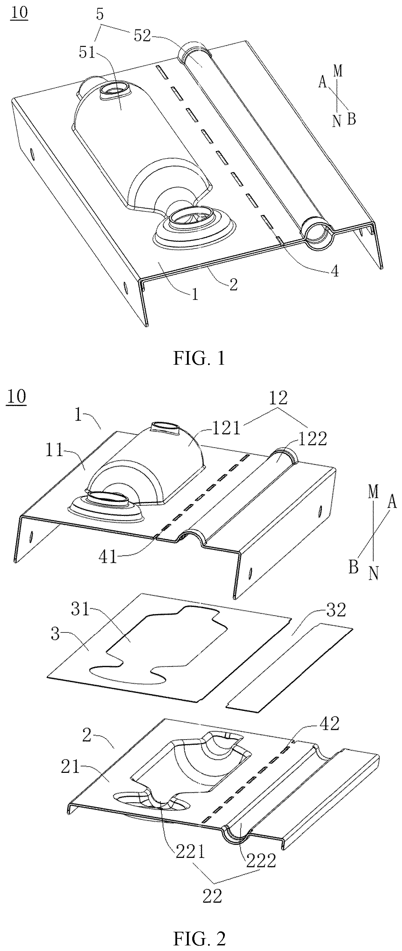

The pipeline device 10, according to an embodiment that does not fall within the protection scope of the present invention, will now be described in detail referring to FIGS. 1-12.

With reference to FIGS. 1 and 7-8, a pipeline device 10 according to an embodiment may include a first cover body 1 and a second cover body 2, wherein the first cover body 1 has a first fitting plate 11, and the second cover body 2 has a second fitting plate 21, wherein the first and second fitting plates 11, 21 face towards each other and fit with each other to form a first cavity 51, a second cavity 52 and an isolation portion 4, wherein the first cavity 51 and the second cavity 52 are used for the refrigerant flow, and the isolation portion 4 is located between the first cavity 51 and the second cavity 52, an arrangement path of the isolation portion 4 laterally faces towards an extension path of the first cavity 51 and an extension path of the second cavity 52 at two sides of the isolation portion 4. That is to say, a connecting line between any two points between the first cavity 51 and the second cavity 52 passes through the isolation portion 4 to ensure that the isolation portion 4 may completely cover the area between the first cavity 51 and the second cavity 52; when an inleakage occurs at any position of the first cavity 51 and the second cavity 52 to the other cavity 5, the isolation portion 4 may accurately detect the inleakage, thereby improving the safety in use of the pipeline device 10.

Referring to FIGS. 2-4 and 6, the first fitting plate 11 has a plurality of first recesses 12 hollowed in a first direction (i.e., an M direction). The second fitting plate 21 has a plurality of second recesses 22 hollowed in a direction opposite to the first direction (i.e., a N direction), in other words, the first recesses 12 are hollowed in a direction facing away from the second fitting plate 21, and the second recesses 22 are hollowed in a direction facing away from the first fitting plate 11. The second recesses 22 have a one-to-one correspondence to the first recesses 12. In some embodiments, the number of the second recesses 22 is the same as that of the first recesses 12, and the positions of the second recesses 22 correspond to that of the first recesses 12 one by one; each of the second recesses 22 and the corresponding first recess 12 fit with each other to form a complete cavity 5; the second recesses 22 and the corresponding first recesses 12 fit with each other to form a plurality of complete cavities 5; the cavities 5 are isolated from each other; a refrigerant usually flows in the cavities 5; and when the pipeline device 10 is applied to a refrigeration system of a refrigeration device such as an air conditioner and a refrigerator, the refrigerant may perform a corresponding refrigeration function.

The cavities 5 include a first cavity 51 and a second cavity 52, and the isolation portion 4 is provided on the first and second fitting plates 11, 21 between the first cavity 51 and the second cavity 52. The arrangement path of the isolation portion 4 ensures that the first cavity 51 and the second cavity 52 on either side may be isolated, so that the isolation portion 4 may completely cover the area between the first cavity 51 and the second cavity 52, and when an inleakage occurs at any position of the first cavity 51 and the second cavity 52 to the other cavity 5, the isolation portion 4 may accurately detect the inleakage, thereby improving the safety in use of the pipeline device 10.

It should be noted that the number of the first cavity 51 may be one or more, and the number of the second cavity 52 may be one or more. The isolation portions 4 are provided on the first and second fitting plates 11, 21 between any two adjacent cavities 5.

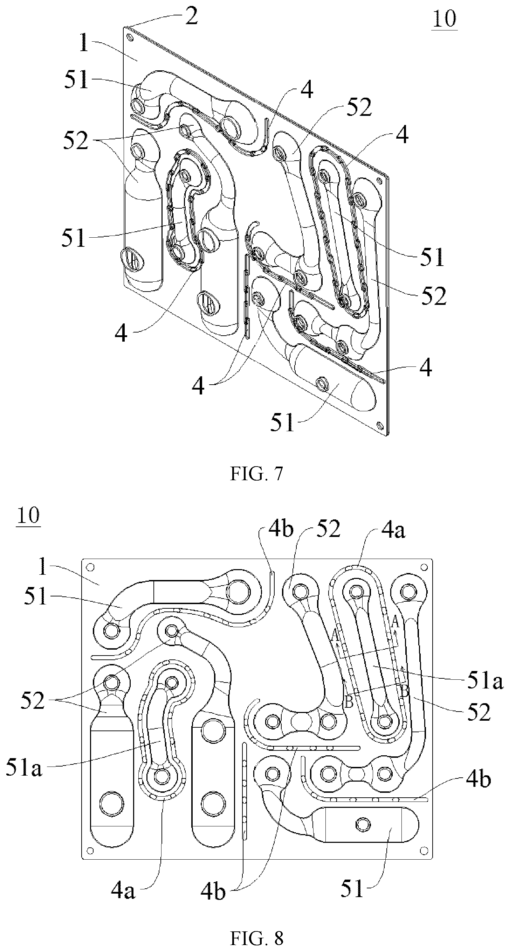

For example, in an embodiment shown in FIGS. 7-8, a plurality of first cavities 51 and a plurality of second cavities 52 are provided, and first cavities 51 and second cavities 52 adjacent to each other are isolated by the isolation portions 4.

Also, in an embodiment shown in FIG. 1, one first cavity 51 and one second cavity 52 are provided, and the first cavity 51 and the second cavity 52 are isolated by the isolation portion 4.

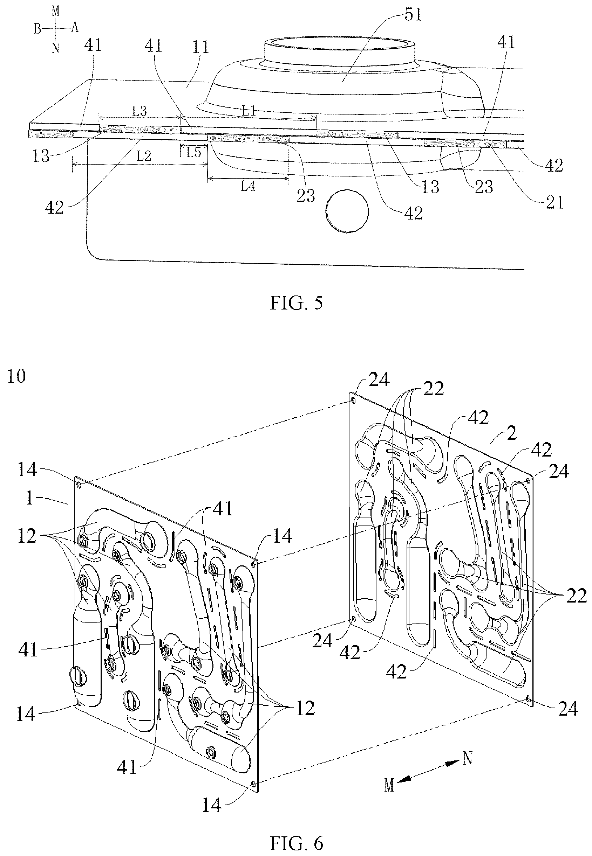

Referring to FIGS. 2-4, as shown in FIG. 6, the isolation portion 4 may include: at least one first slit 41 and at least one second slit 42, wherein the first slit 41 is provided on the first fitting plate 11 and penetrates the first fitting plate 11, and the second slit 42 is provided on the second fitting plate 21 and penetrates the second fitting plate 21. In some embodiments, the first slit 41 is provided on the first fitting plate 11, the first slit 41 penetrates the first fitting plate 11 in the thickness direction (i.e., an MN direction) of the first fitting plate 11, the second slit 42 is provided on the second fitting plate 21, and the second slit 42 penetrates the second fitting plate 21 in the thickness direction (i.e., the MN direction) of the second fitting plate 21; the first slit 41 and the second slit 42 have the same arrangement path, that is, the arrangement path of the first slit 41 and the arrangement path of the second slit 42 are both the same as the arrangement path of the isolation portion 4.

On a planar projection parallel to the fitting surface of the first and second fitting plates 11, 21, i.e., on a plane perpendicular to the line MN, one of the at least one first slit 41 is at least partially connected to at least one of the at least one second slit 42 to form at least a part of the arrangement path of the isolation portion 4. In other words, there is a certain intersecting distance between the first slit 41 and the second slit 42 on the arrangement path of the isolation portion 4, so that it is possible to avoid a situation where there is a blind area for inleakage detection when the first slit 41 and the second slit 42 do not intersect, i.e., there is no blind area for inleakage detection, and it is possible to ensure that when communication occurs between the first cavity 51 and the second cavity 52, and when the refrigerant in the first cavity 51 and the second cavity 52 inleakages, the refrigerant in the inleakage may overflow from the first slit 41 or the second slit 42 and leak to the outside without the inleakage flowing to the adjacent cavity 5 affecting the performance of the refrigeration device.

According to the pipeline device 10 of an embodiment, by providing the isolation portion 4, it is possible to accurately detect whether an inleakage occurs between the first cavity 51 and the second cavity 52, so that it may be ensured that the inleakage leaks from the isolation portion 4 to the outside when the inleakage penetrates the flow channels in the first cavity 51 and the second cavity 52 due to a structural defect, and the inleakage will not flow to the adjacent cavity 5 to affect the performance of the refrigeration device, and it may also be ensured that the inleakage detection in the pipeline device 10 may be completed at one time without separately detecting the flow channel of each of the first cavity 51 and the second cavity 52, which greatly improves the leakage detection efficiency of the pipeline device 10 and facilitates the determination of the inleakage point during subsequent maintenance.

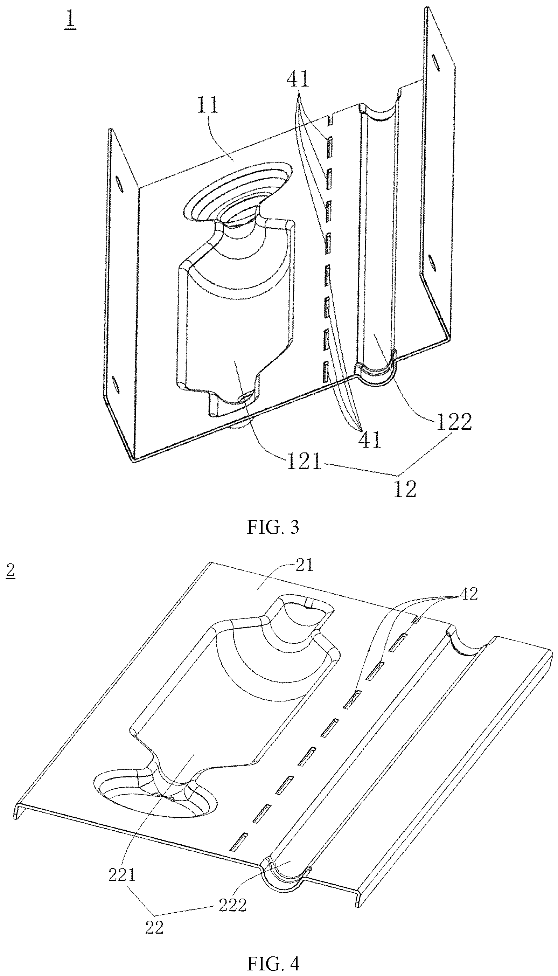

In some embodiments, as shown referring to FIGS. 3-5, the at least one first slit 41 includes a plurality of first slit 41, and two adjacent first slit 41 are spaced apart by the first spacing portion 13, so that the first cover body 1 may be ensured to have a good strength, and the first slit 41 do not weaken the strength of the first cover body 1 too much, and at the same time, the first slit 41 are simple in structure and easy to manufacture. The first spacing portion 13 is aligned with one of the at least one second slit 42, and the second slit 42 has a length not smaller than a length of the first spacing portion 13. Similarly, the at least one second slit 42 includes a plurality of second slit 42, and two adjacent second slit 42 are spaced apart by the second spacing portion 23, so that the second cover body 2 may be ensured to have a good strength, and the second isolation portion does not weaken the strength of the second cover body 2 too much, and at the same time, the second isolation portion is simple in structure and easy to manufacture. The second spacing portion 23 is aligned with one of the at least one first slit 41, and the first slit 41 has a length not smaller than a length of the second spacing portion 23. For example, referring to the dimensional relationship of FIG. 5, the length of the first slit 41 is L1, the length of the second slit 42 is L2, the length of the first spacing portion 13 is L3, and the length of the second spacing portion 23 is L4, and L1 and L4 satisfy the relationship: L1≥L4, and L2 and L3 satisfy the relationship: L2≥L3. In this way, it is ensured that between the first cavity 51 and the second cavity 52, the isolation portion 4 fully covers, and no blind area for an inleakage detection occurs; when communication occurs between any position of one cavity 5 and the other cavity 5 and an inleakage occurs, the refrigerant in the inleakage may overflow from the isolation portion 4 to facilitate a user to quickly locate an inleakage point.

Alternatively, referring to FIG. 6, the first and second slit 41 and 42 may be configured as arc-shaped slits, and the first slit 41 and the second slit 42 are arranged along the same arc-shaped path, that is, the isolation portions 4 are arranged along the same arc-shaped path.

Alternatively, referring to FIG. 5, the first slit 41 and the second slit 42 may be configured as long straight strip-shaped slits, and the first slit 41 and the the second slit 42 are arranged along the same straight path, that is, the isolation portions 4 are arranged along the same straight path.

Alternatively, the first slit 41 and the second slit 42 may be configured as mansarded slits, and the first slit 41 and the second slit 42 are arranged along the same mansarded path, that is, the isolation portions 4 are arranged along the same mansarded path.

In some embodiments, referring to FIGS. 5-6 and 8-10, in a direction perpendicular to the fitting surface of the first and second mating panels 11, 21, i.e., in the direction of line MN, each of the first slit 41 is aligned with a part of the second slit 42 that is adjacent to the first slit 41, and is staggered with another part of the second slit 42. Similarly, each of the second slit 42 is aligned with a part of the first slit 41 that is adjacent to the second slit 42, and is staggered with another part of the one first slit 41. In other words, the first slit 41 and the second slit 42 are staggered with each other, and there is a certain intersecting distance between the first slit 41 and the second slit 42 in the length direction, so that there is no blind area for inleakage detection, and it is possible to ensure that when communication occurs between the first cavity 51 and the second cavity 52, and when the refrigerant in the first cavity 51 and the second cavity 52 inleakages, the refrigerant in the inleakage may overflow from the first slit 41 or the second slit 42 and leak to the outside without the inleakage flowing to the adjacent cavity 5 affecting the performance of the refrigeration device.

In some embodiments, each of the first slit 41 is aligned with the second slit 42 that is adjacent to the first slit 41 by a length not greater than 1/2 of a length of the first slit 41 and not greater than 1/2 of a length of the second slit 42. Referring to the dimensional relationship of FIG. 5, each of the first slit 41 is aligned with the one second slit 42 adjacent to the first slit 41 by a length L5. L1, L5 satisfy the relational expression: L5 ≤ L1/2, L2, L5 satisfy the relational expression: L5≤L2/2. Thus, it is possible to prevent the first and second slit 41 and 42 from being too long to excessively weaken the strength of the first and second cover bodies 1 and 2.

In some embodiments, each of the first slit 41 is aligned with the second slit 42 that is adjacent to the first slit 41 by a length not smaller than 1/6 of the length of the first slit 41 and not smaller than 1/6 of the length of the second slit 42. Referring to the dimensional relationship of FIG. 5, each of the first slit 41 is aligned with the one second slit 42 adjacent to the first slit 41 by a length L5. L1, L5 satisfy the relational expression: L5≥L1/6, L2, L5 satisfy the relational expression: L5≥L2/6. It is thereby possible to ensure continuity of detection between the first slit 41 and the adjacent second slit 42 without occurrence of a blind area for inleakage detection.

In some embodiments, the at least one first slit 41 includes a plurality of first slit 41, the first slit 41 have equal lengths, and the distances between any two adjacent first slit 41 are equal; the at least one second slit 42 includes a plurality of second slit 42, the second slit 42 have equal lengths, and the distances between any two adjacent second slit 42 are equal. In other words, referring to FIG. 5, each of the first slit 41 has a length L1, each of the first spacing portion 13 between any two adjacent first slit 41 has a length L3, each of the second slit 42 has a length L2, and each of the second spacing portion 23 between any two adjacent second slit 42 has a length L4, so that the distances between the first slit 41 and distances between the second slit 42 may be made uniform, the machining may be facilitated, the machining process may be simplified, and the manufacturing cost may be saved.

In some embodiments, the isolation portion 4 may be a whole circle configuration around the cavity 5. Referring to FIGS. 7-8, the first cavity 51a is surrounded by the isolation portion 4a in a whole circle, so that when an inleakage occurs from the surrounded first cavity 51a to other cavities 5 or from the other cavities 5 to the first cavity 51a, the inleaked liquid overflows from the isolation portion 4a surrounding the first cavity 51a.

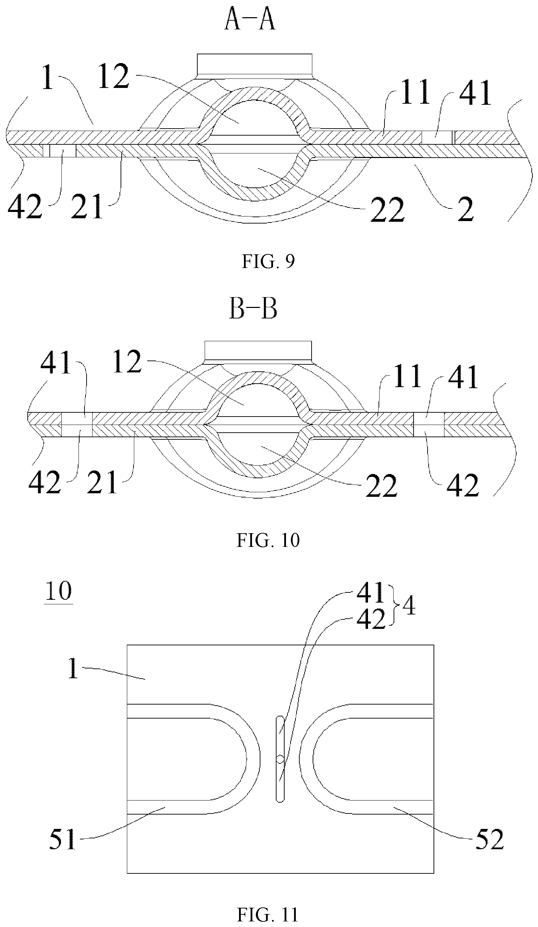

In other embodiments, the isolation portion 4 may also be of a non-whole circle construction, for example in the example shown in FIG. 8, the isolation portion 4b is a longer segment, the extension of the isolation portion 4b is at least substantially the same as the extension of one of the cavities 5 isolated. Also, as in the example shown in FIGS. 11-12, the isolation portion 4 is a short segment, and it is only necessary to provide the isolation portion 4 at the ends of the first cavity 51 and the second cavity 52 close to each other. In the arrangement path of the isolation portion 4, because the adjacent two cavities 5 have less risk of inleakage in the area where the isolation portion 4 is not provided, the isolation portion 4 may not be provided in the area.

In some embodiments, the first fitting plate 11 is fixed to the second fitting plate 21 be welding. For example, as shown referring to FIG. 2, the first and second fitting plates 11, 21 may be fixed by welding with the solder layer 3. Solder layer 3 covers the area between first fitting plate 11 and second fitting plate 21 other than the cavity 5, reducing the risk of inleakage. The solder layer 3 avoids the cavity 5, thereby preventing the solder layer 3 from entering the cavity 5 and affecting the refrigerant flow rate of the cavity 5, and also preventing the solder layer 3 from contaminating the refrigerant in the cavity 5.

The solder layer 3 may be a solder, and when the first and second cover bodies 1, 2 need to be fixed by welding, the first cover body 1, the second cover body 2 and the solder layer 3 are brazed in an oven, and the solder is melted and flowed at a high temperature so as to fill the gap between the first and second cover bodies 1, 2, and after the solder cools and solidifies, the soldering between the first and second cover bodies 1, 2 may be completed. When the solder flows unevenly, the inleakage between two adjacent cavities 5 between the first and second cover bodies 1, 2 are likely to occur, so that the refrigerant in one cavity 5 flows to the other cavity 5, thereby affecting the normal use of the device. Since the pipeline device 10 of an embodiment is provided with the isolation portion 4, in the event of an inleakage of solder, the solder may overflow from the isolation portion 4 and leak to the outside without the inleakage flowing to the adjacent cavity 5 affecting the performance of the refrigeration device.

Alternatively, the first and second fitting plates 11, 21 may both be planes, so that the uniformity of the flow of the solder layer 3, when melting, between the first and second fitting plates 11, 21 may be improved, the soldering effect between the first and second fitting plates 11, 21 may be improved, and the manufacturing process of the planes is simple, which is beneficial to saving manufacturing costs.

In other embodiments, the first and second cover bodies 1, 2 are connected and secured by a fastener such as a bolt, a rivet, etc. for example, in the examples of FIGS. 6-8, the first cover body 1 is provided with a first mounting hole 14, the second cover body 2 is provided with a second mounting hole 24, and a bolt may be passed through the first mounting hole 14 and the second mounting hole 24 and then screwed with a nut so as to connect the first and second cover bodies 1, 2. Specifically, the first mounting hole 14 is provided on the first fitting plate 11, and the second mounting hole 24 is provided on the second fitting plate 21, so that the first and second fitting plates 11, 21 may be closely fit after the first and second cover bodies 1, 2 are fastened by a fastener.

In some embodiments, the first and second cover bodies 1, 2 are made of stainless steel, i.e., the first and second cover bodies 1, 2 are stainless steel covers. Stainless steel is more rigid and less costly than red copper and copper, which is advantageous in reducing the overall cost of the pipeline device 10.

A pipeline device 10, according to an embodiment that does not fall within the protection scope of the present invention, will now be described in detail referring to FIGS. 1-5 and 11-12.

Referring to FIGS. 1-2, a pipeline device 10 may include: a first cover body 1, a second cover body 2 and a solder layer 3.

The first cover body 1 includes a first fitting plate 11, wherein the first fitting plate 11 has a plurality of first recesses 12 hollowed in a first direction (i.e., an M direction). The second cover body 2 includes a second fitting plate 21, wherein the second fitting plate 21 has a plurality of second recesses 22 hollowed in a direction opposite to the first direction (i.e., a N direction), in other words, the first recesses 12 are hollowed in a direction facing away from the second fitting plate 21, and the second recesses 22 are hollowed in a direction facing away from the first fitting plate 11. The second recesses 22 have a one-to-one correspondence to the first recesses 12. In some embodiments, the number of the second recesses 22 is the same as that of the first recesses 12, and the positions of the second recesses 22 corresponds to that of the first recesses 12 one by one; each of the second recess 22 and the corresponding first recess 12 fit with each other to form a complete cavity 5; the second recesses 22 and the corresponding first recesses 12 fit with each other to form a plurality of complete cavities 5; the cavities 5 are isolated from each other; a refrigerant usually flows in the cavities 5; and when the pipeline device 10 is applied to a refrigeration system of a refrigeration device such as an air conditioner and a refrigerator, the refrigerant may perform a corresponding refrigeration function.

An isolation portion 4 is provided on the first and second fitting plates 11, 21 between two adjacent cavities 5, and a length of the isolation portion 4 is not shorter than a length of any one of the two adjacent cavities 5; in this way, the isolation portion 4 may completely cover the area between the two adjacent cavities 5; and when an inleakage occurs at any position of one of the two adjacent cavities 5 to the other cavity 5, the isolation portion 4 may accurately detect the inleakage, thereby improving the safety in use of the pipeline device 10.

The solder layer 3 is provided between the first and second fitting plates 11, 21, and the solder layer 3 is used for soldering the first and second fitting plates 11, 21. The solder layer 3 may be a solder, and when the first and second cover bodies 1, 2 need to be fixed by welding, the first cover body 1, the second cover body 2 and the solder layer 3 are brazed in an oven, and the solder is melted and flowed at a high temperature so as to fill the gap between the first and second cover bodies 1, 2, and after the solder cools and solidifies, the soldering between the first and second cover bodies 1, 2 may be completed. When the solder flows unevenly, the inleakage between two adjacent cavities 5 between the first and second cover bodies 1, 2 are likely to occur, so that the refrigerant in one cavity 5 flows to the other cavity 5, thereby affecting the normal use of the device. Since the pipeline device 10 of an embodiment is provided with the isolation portion 4, in the event of an inleakage of solder, the solder may overflow from the isolation portion 4 and leak to the outside without the inleakage flowing to the adjacent cavity 5 affecting the performance of the refrigeration device.

The first and second fitting plates 11, 21 may both be planes, so that the uniformity of the flow of the solder layer 3, when melting, between the first and second fitting plates 11, 21 may be improved, and the soldering effect between the first and second fitting plates 11, 21 may be improved, the manufacturing process of the planes is simple, which is beneficial to saving manufacturing costs.

Further, the solder layer 3 avoids the cavity 5, thereby preventing the solder layer 3 from entering the cavity 5 and affecting the refrigerant flow rate of the cavity 5, and also preventing the solder layer 3 from contaminating the refrigerant in the cavity 5.

In a specific example shown in FIGS. 1-4, the first recess 12 includes a first concave cavity 121 and a first groove 122, and the second recess 22 includes a second concave cavity 221 and a second groove 222, wherein the second concave cavity 221 is fitted with the first concave cavity 121 to form the first cavity 51, and the second groove 222 is fitted with the first groove 122 to form the second cavity 52. Referring to FIG. 2, the solder layer 3 is provided with a first avoidance hole 31 and a second avoidance hole 32, wherein the first avoidance hole 31 is used for avoiding the first cavity 51, and the second avoidance hole 32 is used for avoiding the second cavity 52. When the second cavity 52 is a through cavity in the direction of a line AB, the second avoidance hole 32 divides the solder layer 3 into two parts, one of which is located on the side of the second cavity 52 close to the first cavity 51 and the other of which is located on the side of the second cavity 52 facing away from the first cavity 51. The isolation portion 4 is located between the first cavity 51 and the second cavity 52, and the length of the isolation portion 4 is greater than that of the first cavity 51, while the length of the isolation portion 4 is greater than that of the second cavity 52. Thus, the connection line between any two points between the first cavity 51 and the second cavity 52 passes through the isolation portion 4 to ensure that the isolation portion 4 may completely cover the area between the first cavity 51 and the second cavity 52, and when an inleakage occurs at any position of the first cavity 51 and the second cavity 52 to the other cavity 5, the isolation portion 4 may accurately detect the inleakage, thereby improving the safety in use of the pipeline device 10. Referring to FIGS. 1-2, the term "length" as used herein refers to a dimension in a direction parallel to line AB.

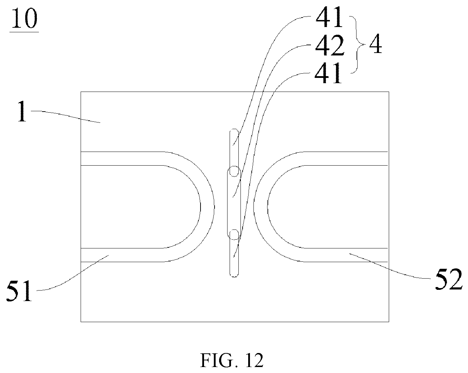

In other embodiments, the isolation portion 4 may also be a short segment, and as shown referring to FIGS. 11 and 12, and it is only necessary to provide the isolation portion 4 at the ends of the first cavity 51 and the second cavity 52 close to each other. In the arrangement path of the isolation portion 4, because the adjacent two cavities 5 have less risk of inleakage in the area where the isolation portion 4 is not provided, the isolation portion 4 may not be provided in the area.

According to the pipeline device 10 of an embodiment, by providing an isolation portion 4, it is possible to accurately detect whether an inleakage occurs between two adjacent cavities 5, so that it may be ensured that the inleakage will leak from the isolation portion 4 to the outside when the inleakage penetrates the flow channels in the two adjacent cavities 5 due to a welding defect, and the inleakage will not flow to the adjacent cavities 5 to affect the performance of the refrigeration device, and it may also be ensured that the inleakage detection in the pipeline device 10 may be completed at one time, and there is no need to separately detect the flow channels of each cavity 5, which greatly improves the leakage detection efficiency of the pipeline device 10 and facilitates the determination of the inleakage point during subsequent maintenance.

In some embodiments, an isolation portion 4 between two adjacent cavities 5 includes a first isolation portion and a second isolation portion, wherein the first isolation portion is provided on a first fitting plate 11, the first isolation portion penetrates the first fitting plate 11 in a thickness direction (i.e., an MN direction) of the first fitting plate 11, the second isolation portion is provided on a second fitting plate 21, the second isolation portion penetrates the second fitting plate 21 in the thickness direction (i.e., the MN direction) of the second fitting plate 21, and the first isolation portion and the second isolation portion have the same arrangement path. That is, the arrangement path of the first isolation portion and the arrangement path of the second isolation portion are the same as the arrangement path of the isolation portion 4. As shown in FIGS. 1-2, the arrangement paths of the first isolation portion and the second isolation portion each extend in a direction of a line AB. In other words, the first isolation portion and the second isolation portion together constitute the isolation portion 4, and a distance between a point of the first isolation portion and the second isolation portion closest to an A end and a point of the first isolation portion and the second isolation portion closest to a B end is the length of the isolation portion 4. As shown in FIG. 1, the dimension of the pipeline device 10 in the direction of the line AB is the length of the isolation portion 4.

In some embodiments, as shown referring to FIGS. 3-5, the first isolation portion may include a plurality of intermittent first slit 41, wherein the first slit 41 are long strip-shaped slits, and the length direction of the first slit 41 extends in the direction of a line AB, the first slit 41 are arranged at intervals in the direction of the line AB, and the first spacing portion 13 is arranged between two adjacent first slit 41, so that the first cover body 1 may be ensured to have a better strength, and the first isolation portion does not weaken the strength of the first cover body 1 too much, and at the same time, the structure of the first isolation portion is simple and the processing thereof is easy. Similarly, the second isolation portion may include a plurality of intermittent second slit 42, wherein the second slit 42 are long strip-shaped slits, and the length direction of the second slit 42 extends in the direction of the line AB, and the second slit 42 are arranged at intervals in the direction of the line AB, and the second spacing portion 23 is provided between two adjacent second slit 42, so that the second cover body 2 may be ensured to have a better strength, and the second isolation portion does not weaken the strength of the second cover body 2 too much, and at the same time, the structure of the second isolation portion is simple and the processing thereof is easy.

Referring to FIG. 5, in the first direction, i.e., in the direction of the line MN, the first spacing portion 13 between two adjacent first slit 41 is aligned with the second slit 42, and the second slit 42 has a length not smaller than a length of the first spacing portion 13, and the second spacing portion 23 between two adjacent second slit 42 is aligned with the first slit 41, and the first slit 41 has a length not smaller than a length of the second spacing portion 23. In the specific example shown in FIG. 5, the length of the first slit 41 is L1, the length of the second slit 42 is L2, the length of the first spacing portion 13 is L3, and the length of the second spacing portion 23 is L4, and L1 and L4 satisfy the relationship: L1≥L4, and L2 and L3 satisfy the relationship: L2≥L3. In this way, it may be ensured that between two adjacent cavities 5, the isolation portion 4 fully covers, and no blind area for an inleakage detection occurs; when communication occurs between any position of one cavity 5 and the other cavity 5 and an inleakage occurs, the refrigerant in the inleakage may overflow from the isolation portion 4 to facilitate a user to quickly locate an inleakage point.

In some embodiments, referring to FIGS. 1-2 and 5, in a first direction, i.e., in the direction of a line MN, each of the first slit 41 is aligned with a part of the second slit 42 that is adjacent to the first slit, and each of the first slit 41 is staggered with another part of the second slit 42. Similarly, each of the second slit 42 is aligned with a part of the first slit 41 that is adjacent to the second slit, and each of the second slit 42 is staggered with another part of the one first slit 41. Thus, there is the isolation portion 4 in the entire line AB direction without blind area for inleakage detection. In other words, the first slit 41 and the second slit 42 are staggered with each other, and the first slit 41 and the second slit 42 have a certain intersecting distance in the length direction, whereby it may be ensured that the inleakage will leak from the first slit 41 or the second slit 42 to the outside when the inleakage penetrates the flow channels in the adjacent two cavities 5 due to the soldering defect, without inleakaging to the adjacent cavity 5 affecting the performance of the refrigeration device. In this way, it is possible to avoid the occurrence of an inleakage detection blind area when the first slit 41 and the second slit 42 do not intersect, for example, an inleakage may occur at the position of the inleakage detection blind area.

In some embodiments, each of the first slit 41 is aligned with the second slit 42 that is adjacent to the first slit by a length not greater than 1/2 of a length of the first slit 41 and not greater than 1/2 of the length of the second slit 42. Each of the first slit 41 is aligned with the one second slit 42 adjacent to the first slit by a length L5, L1, L5 satisfy the relational expression: L5 ≤ L1/2, L2, L5 satisfy the relational expression: L5≤L2/2. Thus, it is possible to prevent the first and second slit 41 and 42 from being too long to excessively weaken the strength of the first and second cover bodies 1 and 2.

In some embodiments, each of the first slit 41 is aligned with the second slit 42 that is adjacent to the first slit by a length not smaller than 1/6 of the length of the first slit 41 and not smaller than 1/6 of the length of the second slit 42. Each of the first slit 41 is aligned with the one second slit 42 adjacent to the first slit by a length L5, L1, L5 satisfy the relational expression: L5≥L1/6, L2, L5 satisfy the relational expression: L5≥L2/6. It is thereby possible to ensure continuity of detection between the first slit 41 and the adjacent second slit 42 without occurrence of a blind area for inleakage detection.

In some embodiments, the first slit 41 have equal lengths, and distances between any two adjacent first slit 41 are equal; the second slit 42 have equal lengths, and distances between any two adjacent second slit 42 are equal. In other words, referring to FIG. 5, each of the first slit 41 has a length L1, each of the first spacing portion 13 between any two adjacent first slit 41 has a length L3, each of the second slit 42 has a length L2, and each of the second spacing portion 23 between any two adjacent second slit 42 has a length L4, so that the distances between the first slit 41 and the distances between the second slit 42 may be made uniform, the machining may be facilitated, the machining process may be simplified, and the manufacturing cost may be saved.

In some embodiments, the first and second slit 41, 42 may be configured as arc-shaped slits, and the first and second slit 41, 42 are all arranged along the same arc-shaped path.

In some embodiments, the solder layer 3 covers the area between the first and second fitting plates 11, 21 other than the cavity 5. As shown in FIG. 2, the other parts of the solder layer 3, except the first avoidance hole 31 and the second avoidance hole 32, are all covered between the first and second fitting plates 11, 21, so that when the solder layer 3 melts, the area between the first and second fitting plates 11, 21 other than the cavity 5 may be fully filled, reducing the risk of inleakage.

In some embodiments, the material of the first and second cover bodies 1, 2 includes iron. It will be appreciated that the main material of the first and second cover bodies 1, 2 includes iron, and may also include other materials, such as carbon, so that the first and second cover bodies 1, 2 are steel covers, alternatively the first and second cover bodies 1, 2 are made of stainless steel, i.e., the first and second cover bodies 1, 2 are stainless steel covers. Of course, in some embodiments, the first and second cover bodies 1, 2 may be a pure iron cover. Iron is more rigid and less costly than red copper and copper, which is advantageous in reducing the overall cost of the pipeline device 10.

A pipeline device 10 according to an embodiment the present invention is described in detail below referring to FIGS. 1-10.

With reference to FIGS. 1 and 7-8, a pipeline device 10 according to a embodiment may include a first cover body 1 and a second cover body 2, wherein the first cover body 1 has a first fitting plate 11, the second cover body 2 has a second fitting plate 21, the first and second fitting plates 11, 21 face towards each other and fit with each other to form at least one cavity 5 for the refrigerant flow and at least one isolation portion 4, the at least one isolation portion 4 is located on at least one side in the circumferential direction of the corresponding at least one cavity 5, and the isolation portion 4 has an arrangement path laterally facing towards an extension path of the corresponding cavity 5. For example, in the example shown in FIGS. 1, 7-8, the cavity 5 includes a first cavity 51, which is provided with the isolation portion 4 on a side in the circumferential direction. When the inleakage occurs from the first cavity 51 to the other cavity 5 or from the other cavity 5 to the first cavity 51, an inleaked liquid flows out from the isolation portion 4 on a side of the first cavity 51.

As shown referring to FIGS. 3-5, each of the at least one isolation portion 4 may include: a plurality of first slit 41 and a plurality of first spacing portion 13 alternately provided on the first fitting plate 11, the first slit 41 penetrating the first fitting plate 11; and a plurality of second slit 42 and a plurality of second spacing portion 23 alternately provided on the second fitting plate 21, the second slit 42 penetrating the second fitting plate 21. In some embodiments, the first slit 41 is provided on the first fitting plate 11, the first slit 41 penetrates the first fitting plate 11 in the thickness direction (i.e., an MN direction) of the first fitting plate 11, the second slit 42 is provided on the second fitting plate 21, and the second slit 42 penetrates the second fitting plate 21 in the thickness direction (i.e., an MN direction) of the second fitting plate 21; the first slit 41 and the second slit 42 have the same arrangement path, that is, the arrangement path of the first slit 41 and the arrangement path of the second slit 42 are both the same as the arrangement path of the isolation portion 4. The first slit 41 are provided, and two adjacent first slit 41 are spaced apart by the first spacing portion 13, so that the first cover body 1 may be ensured to have a good strength, and the first slit 41 do not weaken the strength of the first cover body 1 too much, and at the same time, the first slit 41 are simple in structure and easy to manufacture. The first spacing portion 13 is aligned with the second slit 42, and the second slit 42 has a length not smaller than the length of the first spacing portion 13. The second slit 42 are provided, and two adjacent second slit 42 are spaced apart by the second spacing portion 23, so that the second cover body 2 may be ensured to have a good strength, and the second isolation portion does not weaken the strength of the second cover body 2 too much, and at the same time, the second isolation portion is simple in structure and easy to manufacture.

In some embodiments, referring to FIG. 5, in a direction perpendicular to the fitting surface of the first and second fitting plates 11, 21, i.e., in the direction of the line MN, the first spacing portion 13 face towards the second slit 42, and the first slit 41 face towards the second spacing portion 23. For example, the first spacing portion 13 are aligned with the second slit 42, and the second spacing portion 23 are aligned with the first slit 41. When an inleakage occurs at any position of the cavity 5 to a side where the isolation portion 4 is provided, the inleaked liquid may overflow from the first slit 41 or the second slit 42, and the isolation portion 4 may accurately detect the inleakage, thereby improving the safety in use of the pipeline device 10.

According to the pipeline device 10 of an embodiment, by providing the isolation portion 4, it is possible to accurately detect whether an inleakage occurs on a side of the cavity 5 where the isolation portion 4 is provided, thereby improving the safety in use of the pipeline device 10.

In some embodiments, each of the first slit 41 has a length not smaller than the length of the second spacing portion 23, and each of the second slit 42 has a length not smaller than the length of the first spacing portion 13. For example, referring to the dimensional relationship of FIG. 5, the length of the first slit 41 is L1, the length of the second slit 42 is L2, the length of the first spacing portion 13 is L3, and the length of the second spacing portion 23 is L4, and L1 and L4 satisfy the relationship: L1≥L4, and L2 and L3 satisfy the relationship: L2≥L3. In this way, it may be ensured that one side of the cavity 5 in the circumferential direction is fully covered by the isolation portion 4 without a blind area for an inleakage detection , and when the inleakage occurs at any position of the cavity 5 to the side where the isolation portion 4 is provided, the refrigerant in the inleakage may overflow from the isolation portion 4, thereby facilitating the user to quickly locate the inleakage point.

In some embodiments, referring to FIGS. 5-6 and 8-10, in a direction perpendicular to the fitting surface of the first and second mating panels 11, 21, i.e., in the direction of line MN, each of the first slit 41 is aligned with a part of the second slit 42 that is adjacent to the first slit, and is staggered with another part of the second slit 42. In other words, the first slit 41 and the second slit 42 are staggered with each other, and the first slit 41 and the second slit 42 also have a certain intersecting distance in the length direction, so that no blind area for an inleakage detection occurs, and it may be ensured that when an inleakage occurs at any position of the cavity 5 to the side where the isolation portion 4 is provided, the refrigerant in the inleakage may overflow from the first slit 41 or the second slit 42 and leak to the outside, without inleaking to the adjacent cavity 5 at the other side of the isolation portion 4 to affect the performance of the refrigeration device.

In some embodiments, each of the first slit 41 is aligned with the second slit 42 that is adjacent to the first slit by a length not greater than 1/2 of the length of the first slit 41 and not greater than 1/2 of the length of the second slit 42. Referring to the dimensional relationship of FIG. 5, each of the first slit 41 is aligned with the one second slit 42 adjacent to the first slit by a length L5, L1, L5 satisfy the relational expression: L5 ≤ L1/2, L2, L5 satisfy the relational expression: L5≤L2/2. Thus, it is possible to prevent the first and second slit 41 and 42 from being too long to excessively weaken the strength of the first and second cover bodies 1 and 2.

In some embodiments, each of the first slit 41 is aligned with one of plurality of second slit 42 that is adjacent to the first slit by a length not smaller than 1/6 of the length of the first slit 41 and not smaller than 1/6 of the length of the second slit 42. Referring to the dimensional relationship of FIG. 5, each of the first slit 41 is aligned with the one second slit 42 adjacent to the first slit by a length L5, L1, L5 satisfy the relational expression: L5≥L1/6, L2, L5 satisfy the relational expression: L5≥L2/6. It is thereby possible to ensure continuity of detection between the first slit 41 and the adjacent second slit 42 without occurrence of a blind area for inleakage detection.

In some embodiments, a plurality of first slit 41 are provided, the first slit 41 have equal lengths, and distances between any two adjacent first slit 41 are equal; a plurality of second slit 42 are provided, the second slit 42 have equal lengths, and distances between any two adjacent second slit 42 are equal. In other words, referring to FIG. 5, each of the first slit 41 has a length L1, each of the first spacing portion 13 between any two adjacent first slit 41 has a length L3, each of the second slit 42 has a length L2, and each of the second spacing portion 23 between any two adjacent second slit 42 has a length L4, so that the distances between the first slit 41 and distances between the second slit 42 may be made uniform, the machining may be facilitated, the machining process may be simplified, and the manufacturing cost may be saved.

In some embodiments, the first fitting plate 11 is fixed to the second fitting plate 21 by welding. For example, the first and second fitting plates 11, 21 may be fixed by welding with the solder layer 3. Solder layer 3 covers the area between first fitting plate 11 and second fitting plate 21 other than the cavity 5, reducing the risk of inleakage. The solder layer 3 avoids the cavity 5, thereby preventing the solder layer 3 from entering the cavity 5 and affecting the refrigerant flow rate of the cavity 5, and also preventing the solder layer 3 from contaminating the refrigerant in the cavity 5.

The solder layer 3 may be a solder, and when the first and second cover bodies 1, 2 need to be fixed by welding, the first cover body 1, the second cover body 2 and the solder layer 3 are brazed in an oven, and the solder is melted and flowed at a high temperature so as to fill the gap between the first and second cover bodies 1, 2, and when the solder cools and solidifies, the soldering between the first and second cover bodies 1, 2 may be completed. When the solder flows unevenly, the inleakage between two adjacent cavities 5 between the first and second cover bodies 1, 2 are likely to occur, so that the refrigerant in one cavity 5 flows to the other cavity 5, thereby affecting the normal use of the device.

Alternatively, the first and second fitting plates 11, 21 may both be planes, so that the uniformity of the flow of the solder layer 3, when melting, between the first and second fitting plates 11, 21 may be improved, the soldering effect between the first and second fitting plates 11, 21 may be improved, and the manufacturing process of the planes is simple, which is beneficial to saving manufacturing costs.

In other embodiments, the first and second cover bodies 1, 2 are connected and secured by a fastener such as a bolt, a rivet, etc.

In some embodiments, the first and second cover bodies 1, 2 are made of stainless steel, i.e., the first and second cover bodies 1, 2 are stainless steel covers. Stainless steel is more rigid and less costly than red copper and copper, which is advantageous in reducing the overall cost of the pipeline device 10.

The pipeline device 10, according to an embodiment that does not fall within the protection scope of the present invention, will now be described in detail referring to FIGS. 6-10.

As shown in conjunction with FIGS. 6-8, a pipeline device 10 according to an embodiment may include a first cover body 1 and a second cover body 2, wherein the first cover body 1 has a first fitting plate 11, and the second cover body 2 has a second fitting plate 21, wherein the first and second fitting plates 11, 21 face towards each other and fit with each other to form a cavity 5 and an isolation portion 4, wherein the cavity 5 is used for the refrigerant flow, and the isolation portion 4 is circumferentially arranged on a periphery of the cavity 5, so that when an inleakage occurs from the surrounded cavity 5 to other cavities or from the other cavities to the cavity 5, an inleaked liquid will overflow from the isolation portion 4 surrounding the cavity 5. As shown in FIG. 8, the cavity 5 includes a first cavity 51a, the first cavity 51a is surrounded by the isolation portion 4a in a whole circle, so that when an inleakage occurs from the surrounded first cavity 51a to the other cavities 5 or from the other cavities 5 to the first cavity 51a, the inleaked liquid overflows from the isolation portion 4a surrounding the first cavity 51a.

The isolation portion 4 may include a plurality of first slit 41 and a plurality of second slit 42. The first slit 41 are provided on the first fitting plate 11 and penetrates the first fitting plate 11, and the first slit 41 are configured to be provided at intervals along an arrangement path of the isolation portion 4. The second slit 42 are provided on the second fitting plate 21 and penetrates the second fitting plate 21, and the second slit 42 are configured to be provided at intervals along an arrangement path of the isolation portion 4. In some embodiments, the first slit 41 is provided on the first fitting plate 11, the first slit 41 penetrates the first fitting plate 11 in the thickness direction (i.e., an MN direction) of the first fitting plate 11, the second slit 42 is provided on the second fitting plate 21, and the second slit 42 penetrates the second fitting plate 21 in the thickness direction (i.e., an MN direction) of the second fitting plate 21; the first slit 41 and the second slit 42 have the same arrangement path, that is, the arrangement path of the first slit 41 and the arrangement path of the second slit 42 are both the same as the arrangement path of the isolation portion 4.

On a planar projection parallel to fitting surface of the first and second fitting plates 11, 21, i.e., on a plane perpendicular to the line MN, the first slit 41 and the second slit 42 are alternately provided along the arrangement path of the isolation portion 4, a head end and a tail end of each of the first slit 41 at least partially overlap two second slit 42 that are adjacent to the first slit, and a head end and a tail end of each of the second slit 42 at least partially overlap two adjacent first slit 41 that are adjacent to the first slit. In other words, there is a certain intersecting distance between the first slit 41 and the second slit 42 on the arrangement path of the isolation portion 4, so that it is possible to avoid a situation where there is a blind area for inleakage detection when the first slit 41 and the second slit 42 do not intersect, i.e., there is no blind area for inleakage detection, and it is possible to ensure that, when an inleakage occurs in the surrounded first cavity 51a to the other cavity 5 or the other cavity 5 to the first cavity 51a, an inleaked liquid overflows from the isolation portion 4a surrounding the first cavity 51a and leaks to the outside without the inleakage flowing to the adjacent cavity 5 affecting the performance of the refrigerating device.

According to the pipeline device 10 of an embodiment, by providing the isolation portion 4 circumferentially arranged on the periphery of the cavity 5, it is possible to accurately detect whether or not an inleakage occurs in the cavity 5, thereby improving the safety in use of the pipeline device 10.

In some embodiments , each of the first slit 41 overlaps with the second slit 42 that is adjacent to the first slit by a length not greater than 1/2 of the length of the first slit 41 and not greater than 1/2 of the length of the second slit 42. Referring to the dimensional relationship of FIG. 5, each of the first slit 41 is aligned with the one second slit 42 adjacent to the first slit by a length L5, L1, L5 satisfy the relational expression: L5 ≤ L1/2, L2, L5 satisfy the relational expression: L5≤L2/2. Thus, it is possible to prevent the first and second slit 41 and 42 from being too long to excessively weaken the strength of the first and second cover bodies 1 and 2.

In some embodiments, each of the first slit 41 overlaps with the second slit 42 that is adjacent to the first slit by a length not smaller than 1/6 of the length of the first slit 41 and not smaller than 1/6 of the length of the second slit 42. Referring to the dimensional relationship of FIG. 5, each of the first slit 41 is aligned with the one second slit 42 adjacent to the first slit by a length L5, L1, L5 satisfy the relational expression: L5≥L1/6, L2, L5 satisfy the relational expression: L5≥L2/6. It is thereby possible to ensure continuity of detection between the first slit 41 and the adjacent second slit 42 without occurrence of a blind area for inleakage detection.

In some embodiments, the first slit 41 have equal lengths, and distances between any two adjacent first slit 41 are equal; the second slit 42 have equal lengths, and distances between any two adjacent second slit 42 are equal. In other words, referring to FIG. 5, each of the first slit 41 has a length L1, each of the first spacing portion 13 between any two adjacent first slit 41 has a length L3, each of the second slit 42 has a length L2, and each of the second spacing portion 23 between any two adjacent second slit 42 has a length L4, so that the distances between the first slit 41 and the distances between the second slit 42 may be made uniform, the machining may be facilitated, the machining process may be simplified, and the manufacturing cost may be saved.

In some embodiments, the first fitting plate 11 is fixed to the second fitting plate 21 by welding. For example, the first and second fitting plates 11, 21 may be fixed by welding with the solder layer 3. Solder layer 3 covers the area between first fitting plate 11 and second fitting plate 21 other than the cavity 5, reducing the risk of inleakage. The solder layer 3 avoids the cavity 5, thereby preventing the solder layer 3 from entering the cavity 5 and affecting the refrigerant flow rate of the cavity 5, and also preventing the solder layer 3 from contaminating the refrigerant in the cavity 5.

The solder layer 3 may be a solder, and when the first and second cover bodies 1, 2 need to be fixed by welding, the first cover body 1, the second cover body 2 and the solder layer 3 are brazed in an oven, and the solder is melted and flowed at a high temperature so as to fill the gap between the first and second cover bodies 1, 2, and when the solder cools and solidifies, the soldering between the first and second cover bodies 1, 2 may be completed. When the solder flows unevenly, the inleakage between two adjacent cavities 5 between the first and second cover bodies 1, 2 are likely to occur, so that the refrigerant in one cavity 5 flows to the other cavity 5, thereby affecting the normal use of the device.

Alternatively, the first and second fitting plates 11, 21 may both be planes, so that the uniformity of the flow of the solder layer 3, when melting, between the first and second fitting plates 11, 21 may be improved, the soldering effect between the first and second fitting plates 11, 21 may be improved, and the manufacturing process of the planes is simple, which is beneficial to saving manufacturing costs.

In other embodiments, the first and second cover bodies 1, 2 are connected and secured by a fastener such as a bolt, a rivet, etc.

In some embodiments, the first and second cover bodies 1, 2 are made of stainless steel, i.e., the first and second cover bodies 1, 2 are stainless steel covers. Stainless steel is more rigid and less costly than red copper and copper, which is advantageous in reducing the overall cost of the pipeline device 10.

A refrigeration system according to an embodiment of the present invention includes the pipeline device 10 of the embodiment of the present invention. The refrigeration system may be a refrigeration system of an air conditioner, a refrigeration system of a refrigerator, or a refrigeration system of another device having a refrigeration function.

In describing the description, reference to the description of the terms "an embodiment", "some embodiments", "an example", "particular examples", or "some examples", etc., means that a particular feature, structure, material, or characteristic described in connection with the embodiment or example is included in at least an embodiment or example of the application. In this description, schematic representations of the above terms are not necessarily directed to the same embodiment or example. Further, the particular features, structures, materials, or characteristics described may be combined in any suitable manner in any one or more embodiments or examples. Moreover, various embodiments or examples described in this specification may be combined and combined by a person skilled in the art.

## Claims

1. A pipeline device (10), comprising:
a first cover body (1) having a first fitting plate (11);
a second cover body (2) having a second fitting plate (21), wherein the first fitting plate (11) and the second fitting plate (21) face towards each other and fit with each other to form at least one cavity (5) for a refrigerant flow and at least one isolation portion (4), the at least one isolation portion (4) being located on at least one side of a circumferential direction of the at least one cavity (5), and the isolation portion (4) having an arrangement path laterally facing towards an extension path of the corresponding cavity (5),
wherein each of the at least one isolation portion (4) comprises:
a plurality of first slits (41) and a plurality of first spacing portions (13) alternately provided on the first fitting plate (11), the plurality of first slits (41) penetrating the first fitting plate (11); and
a plurality of second slits (42) and a plurality of second spacing portions (23) alternately provided on the second fitting plate (21), the plurality of second slits (42) penetrating the second fitting plate (21),
wherein in a direction perpendicular to a fitting surface of the first fitting plate (11) and the second fitting plate (21), the first spacing portion (13) faces towards the second slit (42), and the first slit (41) faces towards the second spacing portion (23).

2. The pipeline device (10) according to claim 1, wherein the first slit (41) has a length not smaller than a length of the second spacing portion (23), and wherein the second slit (42) has a length not smaller than a length of the first spacing portion (13).

3. The pipeline device according to claim 1 or 2, wherein in a direction perpendicular to the fitting surface of the first fitting plate (11) and the second fitting plate (21), each of the plurality of first slits (41) is aligned with a part of the second slit (42) that is adjacent to the first slit (41), and is staggered with another part of the second slit (42).

4. The pipeline device according to claim 3, wherein each of the plurality of first slits (41) is aligned with the second slit (42) that is adjacent to the first slit (41) by a length not greater than 1/2 of a length of the first slit (41) and not greater than 1/2 of a length of the second slit (42).

5. The pipeline device according to claim 3 or 4, wherein each of the plurality of first slits (41) is aligned with the second slit (42) that is adjacent to the first slit (41) by a length no smaller than 1/6 of a length of the first slit (41) and not smaller than 1/6 of a length of the second slit (42).

6. The pipeline device (10) according to any one of claims 1 to 5, wherein:
a plurality of first slits (41) is provided and has equal lengths, distances between any two adjacent first slits (41) being equal; and
a plurality of second slits (42) is provided and has equal lengths, distances between any two adjacent second slits (42) being equal.

7. The pipeline device according to any one of claims 1 to 6, wherein the first fitting plate (11) is fixed to the second fitting plate (21) by welding or connected to the second fitting plate (21) by using a fastener.

8. The pipeline device according to any one of claims 1 to 7, wherein the first cover body (1) and the second cover body (2) are made of stainless steel.

## Patentansprüche

1. Rohrleitungsvorrichtung (10), umfassend:
einen ersten Abdeckkörper (1) mit einer ersten Fügeplatte (11);
einen zweiten Abdeckkörper (2) mit einer zweiten Fügeplatte (21), wobei die erste Fügeplatte (11) und die zweite Fügeplatte (21) einander zugewandt sind und miteinander zusammengefügt sind, um zumindest einen Hohlraum (5) für einen Kältemittelfluss und zumindest einen Isolationsabschnitt (4) zu bilden, wobei der zumindest eine Isolationsabschnitt (4) an zumindest einer Seite einer Umfangsrichtung des zumindest einen Hohlraums (5) angeordnet ist und der Isolationsabschnitt (4) einen Anordnungsverlauf aufweist, der seitlich zu einem Erstreckungsverlauf des entsprechenden Hohlraums (5) ausgerichtet ist,
wobei jeder der zumindest einen Isolationsabschnitte (4) umfasst:
eine Mehrzahl erster Schlitze (41) und eine Mehrzahl erster Abstandsabschnitte (13), die abwechselnd auf der ersten Fügeplatte (11) vorgesehen sind, wobei die Mehrzahl erster Schlitze (41) die erste Fügeplatte (11) durchdringen; und
eine Mehrzahl zweiter Schlitze (42) und eine Mehrzahl zweiter Abstandsabschnitte (23), die abwechselnd auf der zweiten Fügeplatte (21) vorgesehen sind, wobei die Mehrzahl zweiter Schlitze (42) die zweite Fügeplatte (21) durchdringen,
wobei in einer Richtung senkrecht zu einer Fügefläche der ersten Fügeplatte (11) und der zweiten Fügeplatte (21) der erste Abstandsabschnitt (13) dem zweiten Schlitz (42) zugewandt ist und der erste Schlitz (41) dem zweiten Abstandsabschnitt (23) zugewandt ist.

2. Rohrleitungsvorrichtung (10) nach Anspruch 1, wobei der erste Schlitz (41) eine Länge aufweist, die nicht kleiner ist als eine Länge des zweiten Abstandsabschnitts (23), und wobei der zweite Schlitz (42) eine Länge aufweist, die nicht kleiner ist als eine Länge des ersten Abstandsabschnitts (13).

3. Rohrleitungsvorrichtung nach Anspruch 1 oder 2, wobei in einer Richtung senkrecht zur Fügefläche der ersten Fügeplatte (11) und der zweiten Fügeplatte (21) jeder der Mehrzahl erster Schlitze (41) mit einem Teil des zweiten Schlitzes (42), der dem ersten Schlitz (41) benachbart ist, fluchtet und zu einem anderen Teil des zweiten Schlitzes (42) versetzt ist.

4. Rohrleitungsvorrichtung nach Anspruch 3, wobei jeder der Mehrzahl erster Schlitze (41) mit dem zweiten Schlitz (42), der dem ersten Schlitz (41) benachbart ist, über eine Länge fluchtet, die nicht größer ist als 1/2 einer Länge des ersten Schlitzes (41) und nicht größer ist als 1/2 einer Länge des zweiten Schlitzes (42).

5. Rohrleitungsvorrichtung nach Anspruch 3 oder 4, wobei jeder der Mehrzahl erster Schlitze (41) mit dem zweiten Schlitz (42), der dem ersten Schlitz (41) benachbart ist, über eine Länge fluchtet, die nicht kleiner ist als 1/6 einer Länge des ersten Schlitzes (41) und nicht kleiner ist als 1/6 einer Länge des zweiten Schlitzes (42).

6. Rohrleitungsvorrichtung (10) nach einem der Ansprüche 1 bis 5, wobei:
eine Mehrzahl erster Schlitze (41) vorgesehen ist und gleiche Längen aufweist, wobei Abstände zwischen jeweils zwei benachbarten ersten Schlitzen (41) gleich sind; und
eine Mehrzahl zweiter Schlitze (42) vorgesehen ist und gleiche Längen aufweist, wobei Abstände zwischen jeweils zwei benachbarten zweiten Schlitzen (42) gleich sind.

7. Rohrleitungsvorrichtung nach einem der Ansprüche 1 bis 6, wobei die erste Fügeplatte (11) durch Schweißen an der zweiten Fügeplatte (21) befestigt ist oder mittels eines Befestigungsmittels mit der zweiten Fügeplatte (21) verbunden ist.

8. Rohrleitungsvorrichtung nach einem der Ansprüche 1 bis 7, wobei der erste Abdeckkörper (1) und der zweite Abdeckkörper (2) aus Edelstahl hergestellt sind.

## Revendications

1. Dispositif de canalisation (10), comprenant :
un premier corps de couvercle (1) comportant une première plaque de raccordement (11) ;
un deuxième corps de couvercle (2) comportant une deuxième plaque de raccordement (21), dans lequel la première plaque de raccordement (11) et la deuxième plaque de raccordement (21) sont tournées l'une vers l'autre et s'emboîtent l'une dans l'autre pour former au moins une cavité (5) pour un flux de réfrigérant et au moins une partie d'isolation (4), l'au moins une partie d'isolation (4) étant située sur au moins un côté d'une direction circonférentielle de l'au moins une cavité (5), et la partie d'isolation (4) ayant un chemin d'agencement faisant face latéralement à un chemin d'extension de la cavité correspondante (5),
dans lequel chacune des au moins une partie d'isolation (4) comprend :
une pluralité de premières fentes (41) et une pluralité de premières parties d'espacement (13) prévues en alternance sur la première plaque d'ajustement (11), la pluralité de premières fentes (41) pénétrant dans la première plaque d'ajustement (11) ; et
une pluralité de secondes fentes (42) et une pluralité de secondes parties d'espacement (23) disposées en alternance sur la seconde plaque d'ajustement (21), la pluralité de secondes fentes (42) pénétrant dans la seconde plaque d'ajustement (21),
dans lequel, dans une direction perpendiculaire à une surface de montage de la première plaque de montage (11) et de la deuxième plaque de montage (21), la première partie d'espacement (13) fait face à la deuxième fente (42), et la première fente (41) fait face à la deuxième partie d'espacement (23).

2. Dispositif de canalisation (10) selon la revendication 1, dans lequel la première fente (41) a une longueur qui n'est pas inférieure à une longueur de la deuxième partie d'espacement (23), et dans lequel la deuxième fente (42) a une longueur qui n'est pas inférieure à une longueur de la première partie d'espacement (13).

3. Dispositif de canalisation selon la revendication 1 ou 2, dans lequel, dans une direction perpendiculaire à la surface d'ajustement de la première plaque d'ajustement (11) et de la deuxi ème plaque d'ajustement (21), chacune des multiples premières fentes (41) est alignée avec une partie de la deuxième fente (42) qui est adjacente à la première fente (41), et est décalée par rapport à une autre partie de la deuxième fente (42).

4. Dispositif de canalisation selon la revendication 3, dans lequel chacune des multiples premières fentes (41) est alignée avec la deuxième fente (42) adjacente à la première fente (41) sur une longueur ne dépassant pas la moitié d'une longueur de la première fente (41) et ne dépassant pas la moitié d'une longueur de la deuxième fente (42).

5. Dispositif de canalisation selon la revendication 3 ou 4, dans lequel chacune des multiples premières fentes (41) est alignée avec la deuxième fente (42) adjacente à la première fente (41) sur une longueur non inférieure à 1/6 d'une longueur de la première fente (41) et non inférieure à 1/6 d'une longueur de la deuxième fente (42).

6. Dispositif de canalisation (10) selon l'une quelconque des revendications 1 à 5, dans lequel :
une pluralité de premières fentes (41) est prévue et présente des longueurs égales, des distances entre n'importe lesquelles deux premières fentes adjacentes (41) étant égales ; et
une pluralité de deuxièmes fentes (42) est prévue et présente des longueurs égales, des distances entre n'importe lesquelles deux deuxièmes fentes adjacentes (42) étant égales.

7. Dispositif de canalisation selon l'une quelconque des revendications 1 à 6, dans lequel la première plaque de raccordement (11) est fixée à la deuxième plaque de raccordement (21) par soudage ou reliée à la deuxième plaque de raccordement (21) à l'aide d'un élément de fixation.

8. Dispositif de canalisation selon l'une quelconque des revendications 1 à 7, dans lequel le premier corps de couvercle (1) et le deuxième corps de couvercle (2) sont en acier inoxydable.
